# EUROPEAN PATENT SPECIFICATION

(11) **EP 2 410 717 B1**
(45) Date of publication and mention of the grant of the patent: **27.05.2015**
(21) Application number: 10170617.4
(22) Date of filing: 23.07.2010
(51) Int. Cl.: H04M 1/02

(54) **Warning and preparatory system for a portable device**
Hinweis- und Vorbereitungssystem für eine tragbare Vorrichtung
Système d'alerte et de préparation pour dispositif portable

(43) Date of publication of application: 25.01.2012
(73) Proprietor: BlackBerry Limited, Waterloo, ON N2K 0A7 (CA)
(72) Inventor: Franceschini, Vincent Jean-François, Waterloo Ontario N2L 5R9 (CA); Ogle, Alexander John, Waterloo Ontario N2L 5R9 (CA)
(74) Representative: Moore, Barry

(56) References cited:
- EP-A1- 1 950 763
- JP-A- 8 129 531
- US-A1- 2007 123 324

## Description

The present document relates generally to mobile communication devices. More particularly, the present document relates to a warning system and method for detection of the removal of a component cover from a portable device.

In recent years, use of portable devices has continued to increase and there is a higher dependency on these devices for communication or other functionality. Many of these devices, such as portable computers, portable DVD players, handheld mobile phones, and accessories to these devices, often require a power source, such as a battery for operation. Many times these batteries are included in a compartment, which is protected under a component cover. If the component cover is removed, the battery or other removable components within the compartment may become disengaged or dislodged. The mobile device may then experience a sudden and unexpected loss of power that can result in the loss of critical system and user data since the device is unable to properly shut down. While many mobile devices are programmed with an interrupt process only a small amount of mobile device critical information can be saved once power is lost.

EP-A-1950763 discloses devices for maintaining data integrity of a removable media card of a handheld electronic device, particularly when such media card is removed from such device. JP-A-8 129531 discloses a computing device having a lid fixing device and a detecting device which detects the lid fixing device being released. US-A-2007/123324 discloses a portable communication terminal that includes an opening/closing mechanism wherein upon predicting the occurrence of a shock resulting from at least one of the opening operation and the closing operation, the head of a hard disk drive is retracted to a safe position so as to prevent damage to the disk and the head.

### GENERAL

It would be useful to have a warning system that will detect the removal of a component cover from a mobile device, along with a method that assists in the proper shut down of the device, in order to save or protect critical data when the warning is initiated.

In one aspect, there may be provided in the following a warning and preparatory system for a mobile device comprising:
a component cover with a detection portion;
a sensor adapted to detect the detection portion of the component cover; and
a processor able to receive information from the sensor and configured to prepare the mobile device for power loss by
   determining active applications executing on the mobile device and pausing, closing or ignoring such applications depending on their power consumption. The processor may be further configured to initiate saving of critical user and system data.

In another aspect, there may be provided a warning and preparatory method for a mobile device comprising:
sensing removal of a component cover of the mobile device, wherein the component cover comprises a detection portion;
determining active applications executing on the mobile device and pausing, closing or ignoring such applications depending on their power consumption;
saving critical user and system data; and
increasing a sampling rate of removable objects to detect whether the removable objects remain present within the mobile device.

Thus there may be provided a warning system and method such that on detection of the removal of the component cover, the mobile device is prepared, or primed, regarding the potential removal of a component so that the mobile device can prepare for this possible event. In one embodiment, the mobile device processor may receive a signal indicating that the component cover is not present so that there is additional time to prime the mobile device before possible removal of the battery or other components such as a SIM card.

When a component, or compartment, cover becomes dislodged or disengaged there can be a substantially increased likelihood of a critical component, like the battery, being removed from the mobile device. As mobile devices continue to have increased processing power, and users engage in more complex applications and operations on their mobile devices, it would be useful to warn the mobile device of this potential loss of power as the residual power on battery removal is typically not sufficient to save critical user data or to commit volatile memory to non-volatile memory.

With the addition of a warning and preparatory system comprising a sensor that can detect the presence or removal of the component cover, the system may allow the mobile device more time to prime for the loss of power. Also the processor and operating system of the mobile device may have the time to determine which applications are currently executing on the process and can save data, store the last state or operate the mobile device in safe mode until either the device loses power, engages a new power source or detects the presence of the component cover.

### BRIEF DESCRIPTION OF THE DRAWINGS

Embodiments will now be described, by way of example only, with reference to the attached Figures, wherein:
Fig. 1 is a schematic drawing of a back of a mobile communication device;
Fig. 2 shows the components of the back of a mobile device with the component cover removed;
Fig. 3 illustrates a warning and preparatory system with the component cover partially off, according to one embodiment;
Fig. 4 illustrates the warning and preparatory system of Fig. 3 with the component cover on;
Fig. 5 illustrates a warning and preparatory system in an alternative embodiment;
Fig. 6 illustrates a warning and preparatory system in another alternative embodiment; and
Fig. 7 illustrates in flow chart form the warning method according to one embodiment of the present invention.

### DESCRIPTION OF DRAWINGS

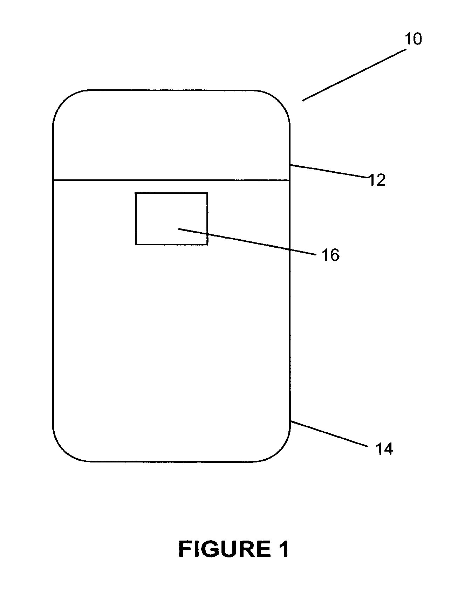

Figure 1 illustrates a rear view of a mobile device 10 according to one embodiment. The mobile device has a back portion 12, which includes a component cover 14 that may be slideably connect to the back portion 12. Other connection methods are known in the art and may include a hinged connection or a depressible button connection.

The component cover 14 is used to cover a compartment within the device, which may be used to house critical device components such as but not limited to, a battery. The component cover 14 may be a typical battery door, covering either a single or multiple batteries, or may be a more complex cover that is designed to hide a SIM card or other removable objects like a Secure Digital (SD) card. The component cover 14 further includes a detection portion 16, which may be a metal or magnetized portion, or other material that may be sensed by a sensor. The detection portion 16 may be any shape such as in the shape of a logo or brand identifier of the mobile device or a mobile device manufacturer.

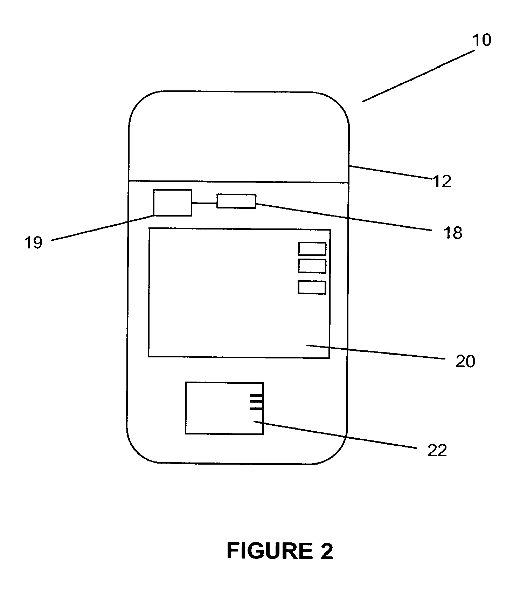

Figure 2 provides a rear view of the mobile device with the component cover removed. Typically, the component cover protects a battery 20, or multiple batteries and a SIM card 22 from being accidently dislodged or disengaged while in operation. A sensor 18 is located within the compartment or at a rear area of the mobile device. The sensor 18 may be fairly small or thin so that it may be incorporated within the available space at the rear of the mobile device 10 and is preferably located directly under the detection portion 16 when the component cover 14 is attached. Various other sensor locations are considered, as a stronger sensor may be able to detect the detection portion 16 from other locations, further removed from the detection portion 16. Alternatively, the sensor 18 may be hidden and may not be visible when the component cover 14 is removed, however, the sensor 18 can still sense the presence the detection portion 16 when the component cover 14 is in place.

Also, the mobile device 10 includes a processor 19, which controls operation of the mobile device 10 and communicates with the sensor 18 to determine if the detection portion 16 is sensed by the sensor 18.

It is the presence, or lack thereof, of the detection portion 16 that the sensor 18 detects. When the sensor 18 no longer detects the presence of the detection portion 16, the sensor 18 will relay that information to the processer 19, which can then initiate a process of preparing the mobile device 10 for a possible loss of power.

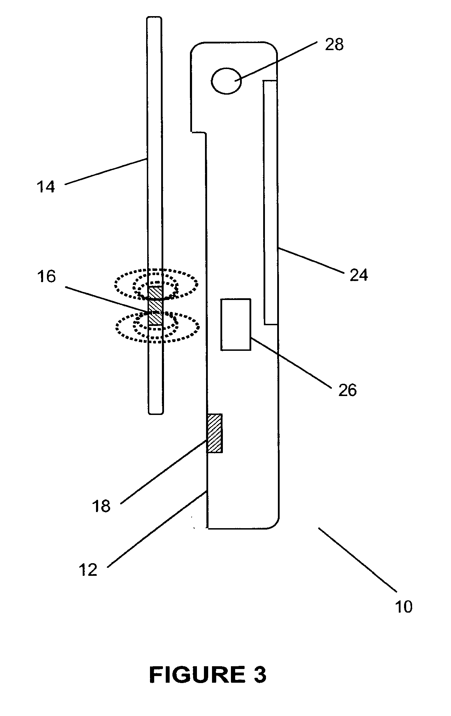

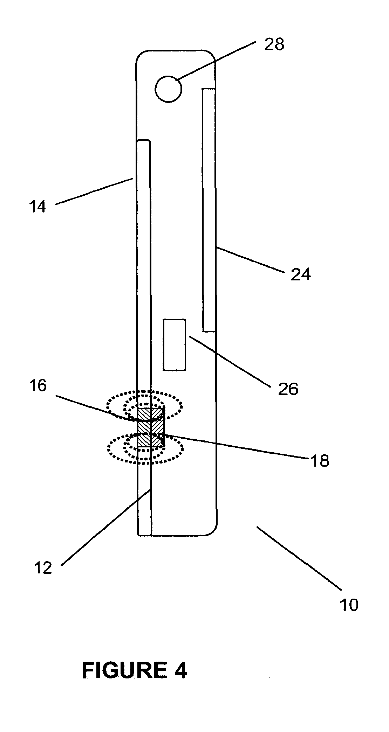

Figures 3 and 4 illustrate another embodiment of a warning and preparatory system. From these side views of the mobile device, other possible components like a display 24, an external button 26 and an earphone jack 28 are visible. In this embodiment, the detection portion 16 is made of a magnet although a metal or magnetized material can also be used. The magnet may be oriented with its north pole directed towards the back of the device, although the opposite orientation is contemplated. In this embodiment, the sensor 18 may be a proximity or Hall effect sensor, which would be able to detect the magnetic field produced by the magnet 16. The Hall effect sensor may be a passive sensor, allowing it to regularly check and provide a step signal change to the processor 19 when the magnetic flux passes a predetermined, or threshold, level.

When the component cover 14 is removed or slid away from the back of the mobile device 12, as in Figure 3, the connection between the sensor 18 and the detection portion 16 is broken in that the sensor 18 is unable to detect the magnetic field being produced by the detection portion 16. The breaking of the connection causes the sensor 18 to relay this information to the processor 19, in the form of a signal representing a warning message. The connection between the sensor 18 and the processor 19 may be wired or wireless.

Once the processor receives the signal, the processor 19 may begin preparing the mobile device 10 for power loss as will be described in more detail below.

While the processor 19 is preparing the device 10, the sensor 18 may continue to check to determine whether the component cover 14 has been replaced, as in Figure 4. If the sensor 18 detects the magnetic field created by the detection portion 16, the sensor 18 may relay this information to the processor 19 so that the processor 19 may terminate any preparatory steps that were being executed in anticipation of battery 20 or other component removal.

In an alternative embodiment, the detection portion 16 can be a speaker embedded within the component cover 14. The Hall effect sensor or proximity sensor 18 may detect the presence, or lack thereof, of the speaker in a similar fashion as is discussed and described above.

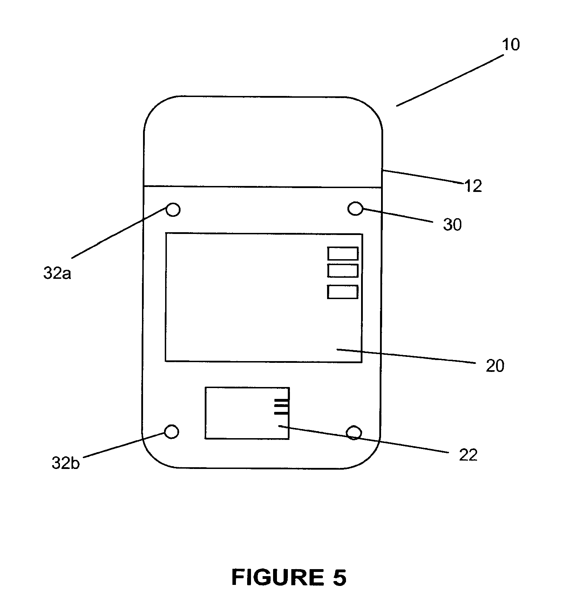

In a further embodiment, as shown in Figure 5, the detection portion 16 may extend to be the full component cover, in that the component cover may be made of metal, or other like material. In this embodiment, there may be sprung pins 32a and 32b at the rear 12 of the mobile device 10 that compress against the component cover (not shown). The sprung pins 32a and 32b may establish a connection between the metal component cover and the system ground of the mobile device 10 to prevent issues with the radio frequency performance.

In this embodiment, the sensor 30 may be an extra sprung pin or an altered existing sprung pin. This sensor pin 30 may be adapted to include a digital signal level that may be read by or transmitted to the processor 19. When the component cover is present, the sensor pin 30 is pulled to ground by the continuity through the component cover. When the component cover is removed, the sensor pin changes to a non-grounded state, which relays this information to the processor indicating that the component cover has been removed or in its expected location. Once the processor receives this information, the processor can prepare, or prime, the device for a possible loss of power.

The sensor pin 30, or any one of the sprung pins 32, may also be used to detect the removal of a component cover made of other material in the same manner; although, component covers of other material may not require sprung pins to prevent, or decrease issues with radio frequency performance.

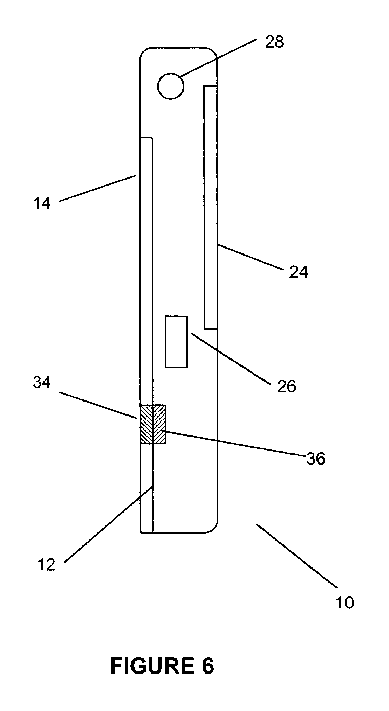

Figure 6 illustrates a further embodiment of a warning and preparatory system for a mobile device. Similar to Figure 4, Figure 6 illustrates a side view of the mobile device 10 outlining the back of the device 12 and a component cover 14. The mobile device may further a display 24, buttons 26 and earphone jack 28. Other mobile device components may also be included but are not shown. In this embodiment, a radio frequency identification ("RFID") tag 34 may be housed within or on a surface of the component cover. Preferably, the RFID tag 34 is a passive RFID tag, not requiring a separate power source but powered by the power source located within the mobile device. An RFID tag requiring a power source is contemplated, but a thicker or larger component cover 14 may be required in order to house this power source. The RFID tag 34 may further incorporate an antenna for sending and receiving signals.

In this embodiment, the warning and preparatory system further comprises an RFID sensor 36. The RFID sensor 36 detects the signal transmitted by the RFID tag 34. The RFID sensor 36 may be a passive sensor and may regularly check to determine whether there continues to be a signal from the RFID tag 34 and provide detection information to the processor 19 when the RF signal passes a predetermined or threshold level.

When the component cover 14 is removed and the RFID tag 34 is distanced from the RFID sensor 36, the RFID sensor 36 is able to detect this distancing through the RFID signals and relay to the processor 19 that that the signal from the RFID tag 34 is weakened or no longer being received. Once the processor receives this information, the processor 19 may begin preparing the mobile device 10 for power loss as will be described in more detail below. The RFID sensor 36 may continue to check for the RFID signal initiated from the RFID tag 34 to determine whether the component cover 14 has been replaced. If the RFID sensor 36 redetects the RFID signal, i.e. the component cover 14 has been replaced, the RFID sensor 36 may relay this information to the processor 19 so that the processor 19 may terminate any preparatory steps currently being undertaken.

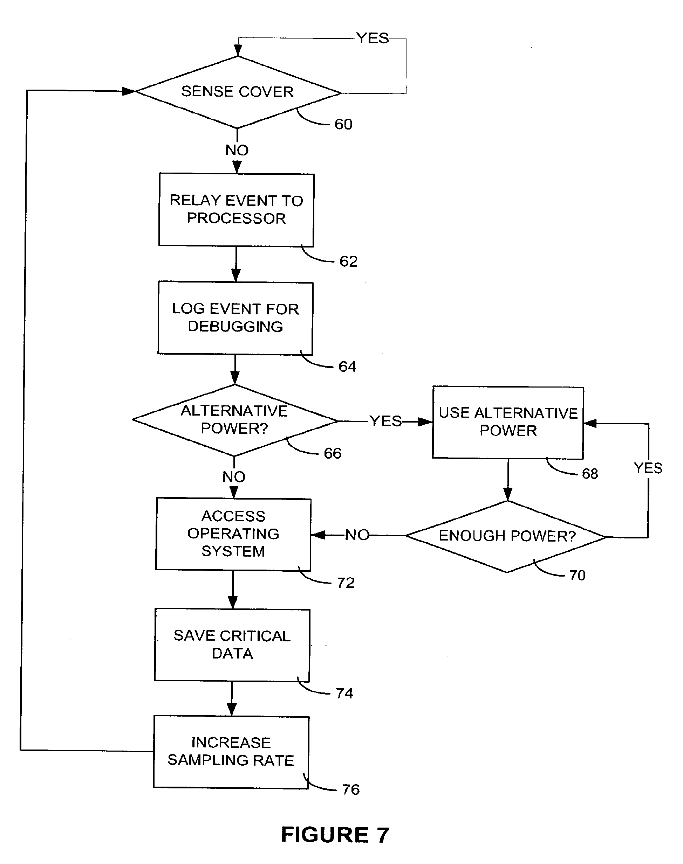

Figure 7 illustrates a flow-chart of a warning and preparatory method according to one embodiment. Firstly, the sensor checks for the detection portion at predetermined time intervals 60. For example, a Hall effect sensor may, at fixed or varying intervals, attempt to detect the presence of the magnetic field produced by a magnetic detection portion. Alternatively, a sprung pin may detect the presence or lack thereof of the component cover as it remains in a grounded state. If the sensor does not detect the presence of the compartment cover, it will relay this information to the processor 62. This detection of the removal of the component cover may be seen as a trigger event for proceeding with further aspects of the warning and preparatory method.

As an optional step, once the signal is received from the sensor, the processor may log 62 this event along with other device information for future debugging. As removal of the component cover tends to be an unusual event, it may be useful to have a record of the conditions surrounding the removal of the cover. This information logged might include, but is not limited to, time stamps, network state, battery capacity, memory use, active applications and a partial or total memory dump.

The processor then determines 66 if the mobile device has a secondary or alternative power source, for example, a second permanent or removal battery, or a wired connection to a wall outlet. If a secondary power supply is available, the processor may then choose to use this alternative power source 68 to power the device so that device data will not be lost due to an unexpected power failure. It may be necessary for the processor to first determine 70 if there is sufficient charge in the secondary power source to safely power the components of the device in the current set up. If there is sufficient charge, the power source may be switched to the secondary power source from the primary power source until either there is no longer sufficient power or until the sensor detects that the component cover is replaced. The check to determine if the component cover is present is continuously performed such that the re-detection of the component cover causes the warning and preparatory method to be stopped or ended. If it appears that the alternative power source does not have enough power to power the device, the processor may then continue the warning and preparatory method as if there was no alternative power source.

If there is no secondary power source or if there is insufficient charge in the secondary power source, the warning and preparatory method prepares the mobile device for the possible loss of power. After key information may be logged 64, the operating system is accessed 72, which may initiate further steps based on what applications are currently active. In one embodiment, the operating system can be accessed to determine which applications are currently executing on the device. Determination of the currently executing applications may include determine if they are high power or low power consuming applications. For example, if a video processing application is currently executing, the processor may pause that application to free up additional power for more critical processes. Other applications may be saved, paused, closed or ignored depending on how critical these applications are to the user and how much power they consume.

The warning and preparatory method may then commence the saving of critical data 74. Data that is critical to the mobile device or the user may be saved as well as volatile memory may be committed to non-volatile memory to prepare for the potential loss of power. The warning and preparatory method may also provide for committing any cached contents to non-volatile storage. The warning and preparatory method provides for the ability to have further data saved, as there is an advanced warning for the mobile device. The warning and preparatory method initiates the saving process, which may be accomplished prior to the battery being removed or dislodged. Critical user data may be saved as opposed to only saving critical mobile device system data. Pausing or terminating applications may provide the pre-programmed interrupt process with more power for its processes on power loss.

The warning and preparatory method also provides for an increased sampling rate to detect the removal of any other removable objects 76. Although this is shown near the end of the flow-chart, it would be understood by those skilled in the art that this may occur either after the data is saved or concurrently with other aspects of the method.

In one embodiment, the SIM card sampling rate may be increased to ensure it has not become dislodged or dislocated with the removal of the component cover. The increased sampling rate of the SIM card may ensure that any network activity is stopped as soon as the SIM card is removed and may prevent activity that cannot be billed accurately. Once the SIM card is removed, any calls or data sessions may be stopped and the radio signal disconnected from the network. The increased sampling rated may be advantageous in the absence of a switch to detect whether the SIM card is present.

Preparation for the removal of the SIM card is one of the steps the mobile device may take to preserve user data and abide by the network rules if the component cover was removed. While increasing the sampling rate, the processor may also determine if there is any unwritten data in a cache of the removable object(s) such as the SIM or the SD card. The processor of the mobile device may then ensure this information is flushed, so that the user may safely remove anything from the compartment without worrying about losing information.

Another optional step of the warning and preparatory method may be that the mobile device may display messages to the user on the display. The mobile device could warn the user of the removal of the component cover or could warn the user to wait before touching anything exposed.

Another feature that may run simultaneously throughout the process may be the sensor continuing to check for the replacement of the component cover. The sensor may continue to check for the detection portion at fixed or varying time intervals. If the sensor detects the return of the detection portion the warning and preparatory method may be stopped the method may return to sensing the presence of the cover 60.
The above-described embodiments are intended to be examples only. Those of skill in the art can effect alterations, modifications and variations to the particular embodiments without departing from the scope of this application.

## Claims

1. A warning and preparatory system of a mobile device comprising:
a component cover (14) with a detection portion (16);
a sensor (18) adapted to detect the detection portion of the component cover; and
a processor able to receive information from the sensor and configured, in response to receiving information from the sensor indicating removal of the component cover, to access an operating system to prepare the mobile device for power loss by determining active applications executing on the mobile device and pausing, closing or ignoring such applications depending on their power consumption and criticalness to a user.

2. The warning and preparatory system of claim 1 wherein the processor is additionally configured to initiate saving of critical user and system data.

3. The warning and preparatory system of claim 1 or claim 2 wherein the detection portion (16) comprises magnetized material, and preferably wherein the detection portion is a magnet.

4. The warning and preparatory system of any preceding claim wherein the detection portion (16) is a speaker.

5. The warning and preparatory system of any preceding claim wherein the sensor (18) is a Hall effect sensor.

6. The warning and preparatory system of claim 1 wherein the sensor (18) is a sprung pin, and preferably wherein the detection portion is the component cover (14).

7. The warning and preparatory system of claim 1 wherein the sensor (18) is a radio frequency identification sensor, and preferably wherein the detection portion is a radio frequency identification tag.

8. The warning and preparatory system of any preceding claim wherein the detection portion (16) comprises a logo or brand identifier of a manufacturer of the mobile device.

9. A warning and preparatory method for a mobile device comprising:
sensing removal of a component cover (14) of the mobile device wherein the component cover comprises a detection portion;
determining active applications, after receiving notification of the removed component cover, executing on the mobile device by accessing an operating system and pausing, closing or ignoring such applications depending on their power consumption and criticalness of the applications to a user;
saving critical user and system data; and
increasing a sampling rate of removable objects to detect whether the removable objects remain present within the mobile device.

10. The warning and preparatory method of claim 9 wherein removal of the component cover (14) is a trigger event for proceeding with the warning and preparatory method.

11. The warning and preparatory method of claim 9 or claim 10 wherein sensing whether the component cover (14) has been removed occurs at fixed time intervals.

12. The warning and preparatory method of any one of claims 9 to 11 further comprising storing information relating to mobile device state, and/or saving unwritten data in a cache of the removable objects.

13. The warning and preparatory method of any one of claims 9 to 12 further comprising switching to an alternative power source after sensing removal of the component cover (14), and preferably further comprising checking a power charge level of the alternative power source.

14. The warning and preparatory method of any one of claims 9 to 13 further comprising stopping the warning and preparatory method when replacement of the component is sensed.

15. A computer readable medium having recorded thereon statements and instructions for execution by a computer to carry out the method of any one of claims 9 to 14.

## Patentansprüche

1. Warn- und Vorbereitungssystem einer mobilen Vorrichtung, das aufweist:
eine Komponentenabdeckung (14) mit einem Erfassungsteil (16);
einen Sensor (18), der ausgebildet ist zum Erfassen des Erfassungsteils der Komponentenabdeckung; und
einen Prozessor, der fähig ist zum Empfangen von Information von dem Sensor und konfiguriert ist, in Reaktion auf das Empfangen von Information von dem Sensor, die ein Entfernen der Komponentenabdeckung angibt, zum Zugreifen auf ein Betriebssystem, um die mobile Vorrichtung für einen Energieverlust vorzubereiten durch Bestimmen von aktiven Anwendungen, die auf der mobilen Vorrichtung ausgeführt werden, und Anhalten, Schließen oder Ignorieren derartiger Anwendungen abhängig von ihrem Energieverbrauch und ihrer Wichtigkeit für einen Benutzer.

2. Das Warn- und Vorbereitungssystem gemäß Anspruch 1, wobei der Prozessor zusätzlich konfiguriert ist zum Initiieren eines Speicherns von kritischen Benutzer- und Systemdaten.

3. Das Warn- und Vorbereitungssystem gemäß Anspruch 1 oder Anspruch 2, wobei der Erfassungsteil (16) magnetisiertes Material aufweist, und wobei vorzugsweise der Erfassungsteil ein Magnet ist.

4. Das Warn- und Vorbereitungssystem gemäß einem vorhergehenden Anspruch, wobei der Erfassungsteil (16) ein Lautsprecher ist.

5. Das Warn- und Vorbereitungssystem gemäß einem vorhergehenden Anspruch, wobei der Sensor (18) ein Hall-Effekt-Sensor ist.

6. Das Warn- und Vorbereitungssystem gemäß Anspruch 1, wobei der Sensor (18) ein Federstift ist, und wobei vorzugsweise der Erfassungsteil die Komponentenabdeckung (14) ist.

7. Das Warn- und Vorbereitungssystem gemäß Anspruch 1, wobei der Sensor (18) ein Funkfrequenzidentifikationssensor ist und wobei vorzugsweise der Erfassungsteil ein Funkfrequenzidentifikations-Tag ist.

8. Das Warn- und Vorbereitungssystem gemäß einem vorhergehenden Anspruch, wobei der Erfassungsteil (16) einen Logo- oder Markenidentifizierer eines Herstellers der mobilen Vorrichtung aufweist.

9. Ein Warn- und Vorbereitungsverfahren für eine mobile Vorrichtung, das aufweist:
Erfassen eines Entfernens einer Komponentenabdeckung (14) der mobilen Vorrichtung, wobei die Komponentenabdeckung einen Erfassungsteil aufweist;
Bestimmen, nach einem Empfangen einer Benachrichtigung hinsichtlich der entfernten Komponentenabdeckung, von aktiven Anwendungen, die auf der mobilen Vorrichtung ausgeführt werden, durch Zugreifen auf ein Betriebssystem und Anhalten, Schließen oder Ignorieren derartiger Anwendungen abhängig von ihrem Energieverbrauch und einer Wichtigkeit der Anwendungen für einen Benutzer;
Speichern kritischer Benutzer- und Systemdaten; und
Erhöhen einer Abtastrate von entfernbaren Objekten, um zu erfassen, ob die entfernbaren Objekte in der mobilen Vorrichtung vorhanden bleiben.

10. Das Warn- und Vorbereitungsverfahren gemäß Anspruch 9, wobei das Entfernen der Komponentenabdeckung (14) ein Auslöseereignis ist zum Fortfahren mit dem Warn- und Vorbereitungsverfahren.

11. Das Warn- und Vorbereitungsverfahren gemäß Anspruch 9 oder Anspruch 10, wobei das Erfassen, ob die Komponentenabdeckung (14) entfernt wurde, in festen Zeitintervallen erfolgt.

12. Das Warn- und Vorbereitungsverfahren gemäß einem der Ansprüche 9 bis 11, das weiter aufweist ein Speichern von Information in Bezug auf einen Zustand der mobilen Vorrichtung und/oder ein Speichern von nichtgeschriebenen Daten in einem Cache der entfernbaren Objekte.

13. Das Warn- und Vorbereitungsverfahren gemäß einem der Ansprüche 9 bis 12, das weiter aufweist ein Umschalten zu einer anderen Energiequelle nach dem Erfassen eines Entfernens der Komponentenabdeckung (14), und vorzugsweise weiter aufweist ein Prüfen eines Energieladepegels der alternativen Energiequelle.

14. Das Warn- und Vorbereitungsverfahren gemäß einem der Ansprüche 9 bis 13, das weiter aufweist ein Beenden des Warn- und Vorbereitungsverfahrens, wenn ein Ersatz der Komponente erfasst wird.

15. Ein computerlesbares Medium, mit darauf gespeicherten Angaben und Anweisungen zur Ausführung durch einen Computer, um das Verfahren gemäß einem der Ansprüche 9 bis 14 auszuführen.

## Revendications

1. Système d'avertissement et de préparation d'un dispositif mobile comprenant :
un couvercle de composant (14) avec une partie de détection (16) ;
un capteur (18) adapté pour détecter la partie de détection du couvercle de composant ; et
un processeur capable de recevoir des informations provenant du capteur et configuré pour accéder, en réponse à la réception d'informations provenant du capteur indiquant le retrait du couvercle de composant, à un système d'exploitation pour préparer le dispositif mobile pour une perte de puissance en déterminant des applications actives s'exécutant sur le dispositif mobile et en interrompant, fermant ou ignorant de telles applications en fonction de leur consommation de puissance et de leur criticité par rapport à un utilisateur.

2. Système d'avertissement et de préparation de la revendication 1, dans lequel le processeur est en outre configuré pour initier la sauvegarde de données d'utilisateur et de système critiques.

3. Système d'avertissement et de préparation de la revendication 1 ou 2, dans lequel la partie de détection (16) comprend un matériau aimanté et, de préférence, dans lequel la partie de détection est un aimant.

4. Système d'avertissement et de préparation de l'une des revendications précédentes, dans lequel la partie de détection (16) est un haut-parleur.

5. Système d'avertissement et de préparation de l'une des revendications précédentes, dans lequel le capteur (18) est un capteur à effet Hall.

6. Système d'avertissement et de préparation de la revendication 1, dans lequel le capteur (18) est une goupille à ressort et, de préférence, dans lequel la partie de détection est le couvercle de composant (14).

7. Système d'avertissement et de préparation de la revendication 1, dans lequel le capteur (18) est un capteur d'identification par radiofréquence et, de préférence, dans lequel la partie de détection est une étiquette d'identification par radiofréquence.

8. Système d'avertissement et de préparation de l'une des revendications précédentes, dans lequel la partie de détection (16) comprend un identifiant de logo ou de marque d'un fabricant du dispositif mobile.

9. Procédé d'avertissement et de préparation pour un dispositif mobile comprenant le fait :
de détecter le retrait d'un couvercle de composant (14) du dispositif mobile dans lequel le couvercle de composant comprend une partie de détection ;
de déterminer des applications actives, après la réception de la notification du couvercle de composant retiré, s'exécutant sur le dispositif mobile en accédant à un système d'exploitation et d'interrompre, de fermer ou d'ignorer de telles applications en fonction de leur consommation de puissance et de la criticité des applications par rapport à un utilisateur ;
de sauvegarder des données d'utilisateur et de système critiques ; et
d'augmenter une vitesse d'échantillonnage d'objets amovibles pour détecter si les objets amovibles restent présents dans le dispositif mobile.

10. Procédé d'avertissement et de préparation de la revendication 9, dans lequel le retrait du couvercle de composant (14) est un événement de déclenchement pour la poursuite du procédé d'avertissement et de préparation.

11. Procédé d'avertissement et de préparation de la revendication 9 ou 10, dans lequel le fait de détecter si le couvercle de composant (14) a été retiré se produit à des intervalles de temps fixes.

12. Procédé d'avertissement et de préparation de l'une quelconque des revendications 9 à 11, comprenant en outre le fait de stocker des informations relatives à l'état du dispositif mobile et/ou de sauvegarder des données non écrites dans une mémoire cache des objets amovibles.

13. Procédé d'avertissement et de préparation de l'une quelconque des revendications 9 à 12, comprenant en outre le fait de commuter vers une source d'alimentation alternative après détection du retrait du couvercle de composant (14) et, de préférence, comprenant en outre le fait de vérifier un niveau de charge d'alimentation de la source d'alimentation alternative.

14. Procédé d'avertissement et de préparation de l'une quelconque des revendications 9 à 13, comprenant en outre le fait d'arrêter le procédé d'avertissement et de préparation lorsque le remplacement du composant est détecté.

15. Support lisible par ordinateur sur lequel des déclarations et des instructions sont enregistrées pour l'exécution par un ordinateur pour mettre en oeuvre le procédé de l'une quelconque des revendications 9 à 14.
